# EUROPÄISCHE PATENTSCHRIFT

(11) **EP 2 760 619 B1**
(45) Veröffentlichungstag und Bekanntmachung des Hinweises auf die Patenterteilung: **24.01.2018**
(21) Anmeldenummer: 12766283.1
(22) Anmeldetag: 26.09.2012
(51) Int. Cl.: B23K 26/00, B29C 59/16, B44C 1/22, B41M 5/46

(54) **Verfahren zum Erzeugen einer Struktur**
Structure producing method
Procédé de production d'une structure

(30) Priorität: 27.09.2011 DE 102011115256
(43) Veröffentlichungstag der Anmeldung: 06.08.2014
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2012/004018
(87) Internationale Veröffentlichungsnummer: WO 2013/045077

(56) Entgegenhaltungen:
- EP-A1- 0 475 861
- WO-A2-2004/096659
- US-A- 3 909 582
- US-B1- 6 427 420

## Beschreibung

Die Erfindung betrifft ein Verfahren zum Erzeugen mindestens einer Struktur unter Lasereinwirkung bei mindestens einem Wandteil einer Behälterwand eines vorzugsweise mittels eines Blasform-, Füll- und Siegelverfahrens hergestellten Kunststoffbehältererzeugnisses mit den Merkmalen im Oberbegriff von Anspruch 1 oder 11.

Vorrichtungen und Verfahren zur Herstellung von hohlen Behältern, wie Ampullen, aus Kunststoff sind in einer Vielzahl von Ausführungsformen Stand der Technik und finden verbreitet Anwendung bei Verpackungssystemen für flüssige oder pastöse Produkte, beispielsweise im Zusammenwirken mit dem bekannten bottelpack®-System. Ein vergleichbares Blasform-, Füll- und Siegelverfahren zum Herstellen von Behältnissen, wie Behältern oder Ampullen, ist beispielsweise in der EP 0 359 971 B1 offenbart.

Es ist auch Stand der Technik, derart hergestellte Behältererzeugnisse mit einer äußeren Struktur zu versehen. Diesbezüglich offenbart die DE 103 28 198 A1 ein Prägeverfahren, bei dem am Behältererzeugnis oder einem davon abtrennbaren Bestandteil eine betreffende Struktur durch Einprägen erzeugt wird, wobei die eingeprägte und insoweit durch eine Vertiefung erzeugte Struktur eine Kennzeichnung bildet, die den Kunststoffbehälter betreffende Kenndaten darstellt. Insbesondere kann es sich dabei um Code-Ziffern handeln, die unter anderem Rückschlüsse zulassen können über den Ort und das Datum der Herstellung sowie über Art und Menge des jeweiligen Behälterinhalts, einschließlich etwaiger Ablaufdaten für den Behälterinhalt.

Die Kenndaten können auch unverschlüsselt zur Information von Endverbraucherkreisen vorliegen. Die Kenndaten sind dazu in Form von alphanumerischen Zeichen oder Lettern ausgebildet. Derartige Kenndaten sind bevorzugt direkt auf dem Behältererzeugnis in Bereichen anzubringen, die das Innere des Behältererzeugnisses mit seinem Fluid oder einem sonstigen Medium umfassen. In diesem Fall sind die Einprägevorgänge entsprechend vorsichtig zu veranlassen, um ein Durchprägen des Behältererzeugnisses zu vermeiden, was zum Unbrauchbarwerden des Behälterinhalts führen könnte.

Die US 3 627 858 A beschreibt ein Verfahren zur Erzeugung eines schaumartigen Oberflächenbereiches auf einem thermoplastischen Wand-Kunststoffteil aus der Gruppe der Polystyrene, Polyamide und dergleichen, wobei das Kunststoffteil zunächst in einem Medium gebeizt und anschließend lokal von einem CO₂-Laser mit einer Wellenlänge von 10,6 µm auf geheizt wird, um einen schaumartigen Bereich an dem Kunststoffteil zu bilden, der dergestalt eine strukturell eingebrachte Kennzeichnung ausbilden kann.

Die DE 196 45 871 A1 beschreibt ein Verfahren zur Herstellung von Formkörpern, wobei mindestens zwei verschiedenfarbige Kunststoffgranulate mechanisch gemischt werden, beispielsweise durch ein Heißpressverfahren oder einen Zwei- oder Mehrkomponentenspritzguss, wobei anschließend eine Laserbeschriftung eingebracht wird, indem das Kunststoffmaterial im Bereich des Schriftzuges "verdampft" wird.

Die WO 2004/096659 A2, die US 3 909 582 A, die EP 0 475 861 A1 und die US 6 427 420 B1 offenbaren jeweils Verfahren zum Einbrennen von Schwächungen in Kunststofffolien mittels Laserlicht. Die WO 2004/096659 A2 beschreibt ein Verfahren gemäß dem Oberbegriff des Anspruchs 1 bzw. des Anspruchs 11.

Die bekannten Verfahren zum Einbringen einer Struktur in ein Kunststoffteil lassen noch Wünsche in Bezug auf die Kürze der Verfahrensdauer sowie auf die Präzision und die zu erkennende Deutlichkeit der zu erzeugenden Struktur offen.

Ausgehend von diesem Stand der Technik liegt der Erfindung die Aufgabe zugrunde, ein Verfahren zum Erzeugen entsprechender Strukturen in derartigen Kunststoffbehältererzeugnissen aufzuzeigen, das auf besonders einfache und sichere Weise durchführbar ist sowie zu deutlich ausgeprägten, erkennbaren Strukturen führt.

Diese Aufgabe wird durch Verfahren gelöst, welche die Merkmale der Patentansprüche 1 oder 11 in ihrer Gesamtheit aufweisen.

Gemäß Anspruch 1 ist vorgesehen, dass die jeweilige zu erzeugende Struktur mittels der Lasereinwirkung zumindest unter Berücksichtigung von
- Laserleistung,
- Einwirkungsdauer des Lasers,
- Art des Kunststoffmaterials und
- Art der gewünschten Struktur
als linienförmige Vertiefung in den einen Wandteil einer Kunststoffwand derart eingebracht wird, dass randseitig und dem Verlauf der linienförmigen Vertiefung folgend diese von je einer Erhebung begrenzt wird, die zumindest teilweise unter dem Einfluss der Eigenmaterialspannung des Kunststoffmaterials zur Entstehung gebracht werden, und dass durch die Lasereinwirkung die Behälterwand aus Kunststoffmaterial lokal erwärmt wird, ohne dass im Bereich der linienförmigen Vertiefung Kunststoff-Fasern oder dahingehende Molekülketten durchschnitten würden und auch ohne dass das Kunststoffmaterial im Bereich der Vertiefung durch die Lasereinwirkung wesentlich verdampft wird, dass also trotz Erzeugung der Struktur die Behälterwand nicht geschwächt wird.

Mithin wird in der Behälterwand eine im Querschnitt gesehen wellenförmige Vertiefung gebildet, die beidseitig von gegenüber der übrigen Behälterwand linienförmig verlaufenden Erhebungen begrenzt ist. Hierbei findet durch die Lasereinwirkung eine Verlagerung des Materials unter Bildung der Vertiefung heraus in Richtung der dann hierdurch gebildeten linienförmigen Erhebungen statt. Durch die Lasereinwirkung wird die Behälterwand aus Kunststoffmaterial lokal erwärmt und ohne dass im Bereich der linienförmigen Vertiefung Kunststoff-Fasern oder dahingehende Molekülketten durchschnitten würden und auch ohne, dass das Kunststoffmaterial im Bereich der Vertiefung durch die Lasereinwirkung wesentlich verdampft wird, wird das erwärmte Kunststoffmaterial unter der Einwirkung des Lasers randseitig nach außen hin verdrängt, so dass im Querschnitt gesehen eine Art Welle entsteht mit mittigem Wellental und randseitig sich anschließenden Wellenbergen. Die Verdrängung des Kunststoffmaterials in Richtung der linienförmigen Erhebungen oder Wellenberge erfolgt unter dem Einfluss der Eigenmaterialspannung des insoweit erwärmten Kunststoffmaterials, wobei Kapillar- und/oder Oberflächenspannungseffekte gleichfalls eine Rolle spielen können.

Es ist für einen Durchschnittsfachmann auf dem Gebiet des Einsatzes der Lasertechnologie bei Kunststoffmaterialien überraschend, dass er ohne, wie im Stand der Technik aufgezeigt, zur Bildung einer Struktur das Kunststoffmaterial mit einem Laser aufschäumen zu müssen (US 3 627 858 A) und ohne das Kunststoffmaterial im Wesentlichen verdampfen zu brauchen (DE 196 45 871 A1), zu Strukturen kommt, die von den linienförmigen Erhebungen her gesehen ständig gegenüber den sonstigen Wandteilen der Behälterwand vorstehen, zu weit verbesserten Ergebnissen kommt, was das Erzeugen der Struktur anbelangt, die insoweit auch deutlich sichtbar und deutlich fühlbar auf dem jeweiligen Behälter hervortritt.

Da das in den Behälter abzufüllende Gut ein empfindliches fluides Medikament sein kann, das gegebenenfalls unter sterilen Reinraumbedingungen abzufüllen ist und im Übrigen insoweit insbesondere, was seine Lebensdauer anbelangt, empfindlich gegenüber Luftsauerstoff reagiert, ist durch das erfindungsgemäße Verfahren sichergestellt, dass durch die Lasereinwirkung das Kunststoffmaterial nicht derart geschädigt, insbesondere verdampft oder in Blasenform übergeführt wird und auch nicht die grundlegende Struktur, wie Fasern oder Molekülketten des Kunststoffmaterials, angegriffen wird, dass also trotz Erzeugung der Struktur die Behälterwand nicht derart geschwächt oder modifiziert wird, als dass in erhöhtem Maß ungewollt Luftsauerstoff oder sonstige das Behälterinnere schädigende Medien die Kunststoff-Behälterwand ungewollt durchdringen können. Um den Inhalt des Behälters verlässlich zu schützen, sollte aber die jeweilige linienförmige Vertiefung die Dicke der Behälterwand nicht um mehr als 50 % reduzieren.

Mit dem vorstehend beschriebenen Verfahren wird in die Behälterwand eine von außen deutlich sichtbare Struktur erzeugt, die abhängig von der Linienführung zur Ausbildung von Buchstaben, Zahlen, Punkten und auch für den Erhalt einer Blindenschrift nach Braille geeignet ist. Ferner lässt sich die jeweilige Struktur beispielsweise zur Verbesserung der Haptik als Riffelung an der Behälterwand oder einer Kappe einsetzen. Somit wird ein einfaches, sicher funktionierendes und flexibel einsetzbares Strukturerzeugungsverfahren für Kunststofferzeugnisse jedweder Art, vorzugsweise jedoch für Behältererzeugnisse, aufgezeigt.

Besonders vorteilhaft bildet sowohl die jeweils in dem einen Wandteil erzeugte Struktur als auch zumindest die sich unmittelbar anschließenden benachbarten Wandteile eine nach außen zur Umgebung hin abgeschlossene, stetig verlaufende, in sich homogene und blasenfrei gestaltete Behälterwand aus. Auf diese Weise kann es nicht zu späteren Einschlüssen von Fremdstoffen in die Behälterwand kommen und die Diffusion von Partikeln aus der Umgebung durch die Behälterwand bleibt auf ein Minimum reduziert, so dass der Behälterinhalt, der sich beim Erzeugen der Struktur bereits im Behälter befinden kann, weder beim Erzeugen der Struktur noch während der anschließenden Lagerung unbrauchbar wird.

Vorteilhaft ist bei der Lasereinwirkung der jeweilige Wandteil der Behälterwand noch vom vorhergehenden Formverfahren, insbesondere einem Blasformverfahren, erwärmt. Dies erlaubt eine schnelle Prozessabfolge und die vorteilhafte Ausnutzung der erwärmten und damit weicheren Struktur der Behälterwand zur Erzeugung der angestrebten Wellenform.

Die linienförmigen Vertiefungen können an Verbindungsstellen, wie Knoten- oder Kreuzungsstellen, zusammengeführt werden, die von den randseitigen Erhebungen bis auf den Durchgriffsbereich der jeweiligen Vertiefung nach außen hin begrenzt werden.

Besonders vorteilhaft lässt sich die Laserintensität zum Erzeugen der Struktur reduzieren, wenn sich die Markierungsgeschwindigkeit verringert oder Wandteile ein zweites Mal vom Laser bestrahlt werden. Durch diese Maßnahme ist sichergestellt, dass die jeweilige linienförmige Vertiefung mit einer annähernd einheitlichen Tiefe ausgebildet wird und ein Durchbrennen der Behälterwand in jedem Fall verhindert wird.

Vorteilhaft können im Bereich von Knoten- und/oder Kreuzungsstellen zumindest teilweise mindestens zwei linienförmige Vertiefungen parallel zueinander verlaufend angeordnet werden, die zwischen sich eine weitere Erhebung begrenzen, die auf der gleichen Niveauebene oder davon verschieden zu den sonstigen Niveauebenen der flankierenden Erhebungen angeordnet wird. Durch diese Maßnahme können die Knoten- und/oder Kreuzungsstellen einfach ausgebildet und gut sichtbar hervorgehoben werden. Insbesondere braucht der Laserstrahl nicht genau die bereits vorher erzeugte Vertiefung der bereits eingebrachten Wellenstruktur zu treffen.

Besonders vorteilhaft wird in den dem Wandteil mit der Struktur gegenüberliegenden, dem Behälterinneren zugewandten Wandteil zeitgleich eine weitere Struktur eingebracht, die der einen Struktur derart nachfolgt, dass an der Stelle der jeweiligen Vertiefung eine Erhebung und an der Stelle der jeweiligen Erhebung eine Vertiefung an- bzw. eingebracht wird. Dies stellt eine stützende Verstärkung und Vereinheitlichung der Behälterwand im Sinne der angestrebten Homogenisierung dar.

Die jeweilige Struktur wird vorteilhaft durch einen CO₂-Laser erzeugt. Es hat sich im Rahmen der erfindungsgemäßen Lösung gezeigt, dass derartige Laser aufgrund ihres Frequenzspektrums und ihrer Intensität zur Erzeugung der Strukturen in Kunststofferzeugnissen besonders gut geeignet sind.

Besonders vorteilhaft wird die jeweilige Struktur mittels Lasereinwirkung in Kunststoffbehältererzeugnisse aus einem Polyolefin-Kunststoffmaterial eingebracht. Insbesondere kann die beschriebene Strukturerzeugung auch für sog. koextrudierte Wandteile von Behältnissen zum Einsatz kommen, wobei mindestens zwei layer- oder schichtenartige Wandteile aneinander zu liegen kommen. Demgemäß kann eine äußere Wandteilschicht des koextrudierten Kunststofferzeugnisses derart von der Materialseite her gewählt werden, dass sich besonders günstig und prozesstechnisch sicher die Struktur in das dahingehende Wandteil einbringen lässt, wobei die mindestens eine im Verbund nachfolgende koextrudierte Schicht vorzugsweise aus einem anderen Kunststoffmaterial bestehend in der Art einer Sperre die Mikration von Fremdstoffen in das Innere des Behältnisses unterbinden kann. Für eine gute Haptik und/oder Lesbarkeit der zu erzeugenden Struktur kann es genügen, wenn an der linienförmigen Vertiefung im Behälterwandteil nur auf einer Wandseite die linienförmige Erhebung parallel zur linienförmigen Vertiefung auftritt, was dann jedoch eine genaue Lasereinsatztechnologie erfordert.

Gemäß Anspruch 11 ist ein Verfahren zum Erzeugen mindestens einer Struktur unter Lasereinwirkung bei mindestens einem Wandteil einer Behälterwand eines mittels eines Blasform-, Füll- und Siegelverfahrens hergestellten Kunststoffbehältererzeugnisses vorgesehen, wobei die jeweilige Struktur mittels der Lasereinwirkung zumindest unter Berücksichtigung von Laserleistung, Einwirkungsdauer des Lasers, Art des Kunststoffmaterials und Art der gewünschten Struktur als linienförmige Vertiefung in dem einen Wandteil derart eingebracht wird, dass randseitig und dem Verlauf der linienförmigen Vertiefung folgend diese von je einer Erhebung begrenzt wird, die unter dem Einfluss der Eigenmaterialspannung des Kunststoffmaterials zur Entstehung gebracht werden, wobei durch die Lasereinwirkung die Behälterwand aus Kunststoffmaterial lokal erwärmt wird, ohne dass im Bereich der linienförmigen Vertiefung Kunststoff-Fasern oder dahingehende Molekülketten durchschnitten würden und auch ohne dass das Kunststoffmaterial im Bereich der Vertiefung durch die Lasereinwirkung wesentlich verdampft wird, dadurch gekennzeichnet, dass also trotz Erzeugung der Struktur die Behälterwand nicht geschwächt wird, und dass bei der Lasereinwirkung der jeweilige Wandteil der Behälterwand noch vom vorhergehenden Formverfahren, insbesondere Blasformverfahren, her erwärmt ist.

Nachstehend ist die Erfindung anhand der Zeichnung im Einzelnen erläutert. Es zeigen:
Fig. 1 eine Seitenansicht eines ampullenartigen, nach dem erfindungsgemäßen Verfahren mit einer außenseitigen Struktur in Form einer Beschriftung versehenen Kunststoffbehälters ohne zugehöriges Kappenteil;
Fig. 2 eine gegenüber der Fig. 1 um 90° gedrehte Seitenansicht des Behälters mit einem teilweise aufgeschnitten gezeigten Kappenteil;
Fig. 3 eine erzeugte Struktur am Beispiel der Ziffer "4" gemäß Ziffernfolge nach der Fig. 1; und
   in der Art jeweils einer photographischen Darstellung
Fig. 4 eine Draufsicht auf die Struktur der Fig. 3 an der Position A;
Fig. 5 eine Draufsicht auf die Struktur der Fig. 3 an der Position B;
Fig. 6 eine Draufsicht auf die Struktur der Fig. 3 an der Position C;
Fig. 7 einen teilweise dargestellten Querschnitt durch die Struktur der Fig. 3 an der Position A entlang der Linie X-X in Fig. 4;
Fig. 8 einen teilweise dargestellten Querschnitt durch die Struktur der Fig. 3 an der Position B entlang der Linie Y-Y in Fig. 5; und
Fig. 9 einen teilweise dargestellten Querschnitt durch die Struktur der Fig. 3 an der Position C entlang der Linie Z-Z in Fig. 6.

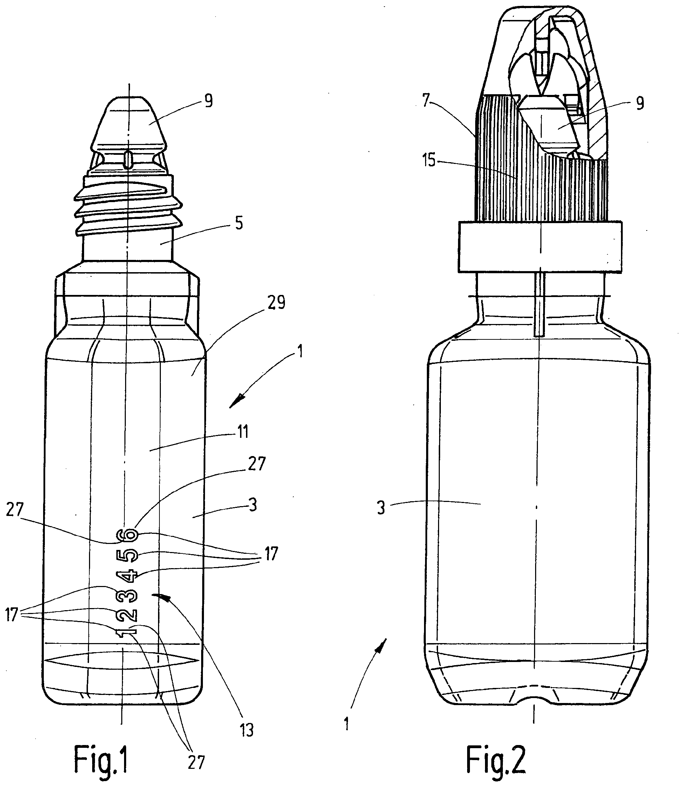

In der Zeichnung ist ein Kunststoffbehältererzeugnis oder Behältnis in Form einer Ampulle 1 dargestellt. Die Ampulle 1 weist einen Behälterkörper 3 auf, an den sich nach oben ein Halsteil 5 anschließt, auf das ein Kappenteil 7 aufschraubbar aufgesetzt ist, das lediglich in der Fig. 2 dargestellt ist. Das Halsteil 5, das Kappenteil 7 sowie ein am Ende des Halsteils 5 befindliches Verschlussteil 9 sind in der aus der DE 10 2005 025 760 A1 bekannten Weise ausgebildet. In der Fig. 2 ist das Kappenteil 7 in einer Ausgangsstellung gezeigt, die einem Auslieferungszustand der Ampulle 1 entspricht. Wie aus dem vorstehenden Dokument bekannt ist, bildet das Kappenteil 7 bei weiterem Aufschrauben eine Art Öffnungseinrichtung aus, um durch ein Durchstoßen des Verschlussteils 9 mittels eines Dorneinsatzes des Kappenteils 7 den Ampulleninhalt für die Benutzung freizugeben.

In der Zeichnung ist als Beispiel eines Behältererzeugnisses, das mit dem erfindungsgemäßen Verfahren mit einer äußeren Struktur versehen ist, eine Ampulle 1 für eine Füllmenge von 10 ml gegenüber der natürlichen Größe in doppeltem Maßstab dargestellt. Die Ampulle 1 hat eine unrunde, im Wesentlichen ovale Gestalt des Behälterkörpers 3, und in Fig. 1 ist die schmälere Seite des Behälterkörpers 3 sichtbar. Auf einem zentralen Wandteil 11 dieser Seite ist eine Struktur in Form einer Kennzeichnung 13 aufgebracht, die beim vorliegenden Beispiel aus sechs Code-Ziffern 1 2 3 4 5 6 besteht. Diese sind durch Lasereinwirkung ausgebildet. Vorzugsweise ist die Lasereinrichtung (nicht dargestellt) als autarke Laserstation zwischen der bottel-pack®-Fertigungseinrichtung und einer Stanzeinrichtung angeordnet, die Randabfall am Ampullengurt abtrennt und/oder die Ampullen separiert. Die Laserstation kann in Koordination mit dem bottelpack®-System zusammen getaktet sein. Bei in engem zeitlichem und räumlichem Zusammenhang mit dem bottelpack®-System arbeitender Laserstation kann der Kunststoff der Ampulle 1 prozessbedingt durch Restwärme noch eine erhöhte Temperatur besitzen, vorzugsweise etwa im Bereich von 45 °C, was für das Erzeugen der Struktur in der Behälterwand 29 günstig ist.

Während in der Fig. 1 eine Kennzeichnung 13 als erzeugte Struktur in einem Behälter-Wandteil 11 dargestellt ist im Sinne einer lesbaren Code-Angabe 1 2 3 4 5 6 können durch die nachfolgend noch näher beschriebene Lasereinwirkung auch anderweitige Strukturen im Behälter, beispielsweise zur Verbesserung der Haptik des Behältererzeugnisses, gebildet werden. So zeigt beispielsweise die Fig. 2 eine durch entsprechende Lasereinwirkung erzeugte Riffelung 15 am Kappenteil 7 der Ampulle 1, die die Handhabung des Kappenteils 7 verbessert.

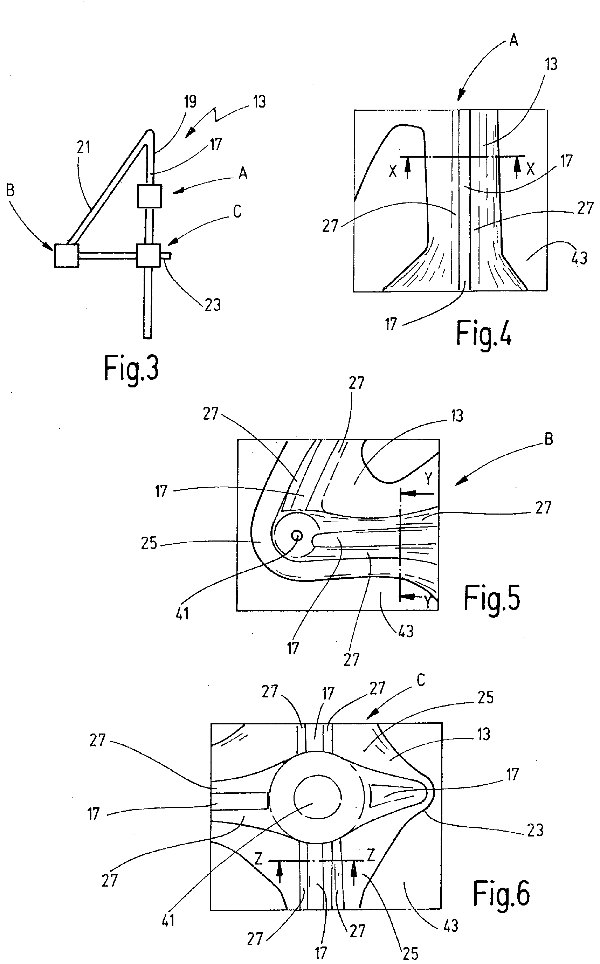

Das Einbringen der Struktur 13 wird nachfolgend anhand der Fig. 3 bis 9 näher erläutert. Wie man in der Fig. 3 sehen kann, soll dabei eine Ziffer "4" der Codierung 1 2 3 4 5 6 nach der Fig. 1 als Struktur mittels Lasereinwirkung zumindest unter Berücksichtigung von Laserleistung, Einwirkungsdauer des Lasers und Art des Kunststoffmaterials als linienförmige Vertiefung 17 in einem Wandteil 11 der Behälterwand 29 eines Kunststoffbehältererzeugnisses eingebracht werden. Dabei soll randseitig und dem Verlauf der linienförmigen Vertiefung 17 folgend diese von Erhebungen 27 flankiert werden, die unter dem Einfluss der Materialeigenspannung des Kunststoffmaterials zur Entstehung gebracht werden. In diesem speziellen Beispiel wird zunächst der vertikale Strich 19 der Zahl "4" erzeugt, der nahtlos in einen schrägen Abstrich 21 sowie in einen horizontalen Querstrich 23 ausmündet, der den Vertikalstrich 19 kreuzt. Die Struktur der linienförmigen Vertiefung 17 mit ihren beiden Erhebungen 27 und den sich daran anschließenden Randbereichen 25 an den Positionen A, B und C, ist in den Fig. 4 bis 6 jeweils in einer photographieartigen Draufsicht gezeigt, wobei sich in den Positionen B und C die linienförmigen Vertiefungen 27 treffen, sofern der Laser in einem Verfahrensgang die Struktur 17 herstellt.

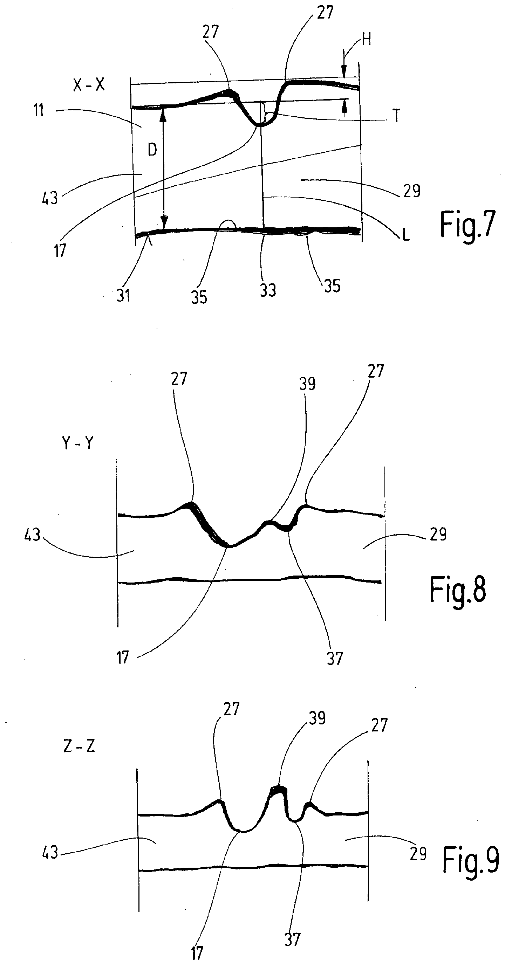

An der Position A des vertikalen Balkens der "4" wird eine linienförmige Vertiefung 17 ausgebildet. Diese hat einen geraden Verlauf. Die Vertiefung 17 ist im Wesentlichen U-förmig und erinnert an ein Wellental. Randseitig ist die Vertiefung durch Erhebungen 27, die man auch als Wellenberge bezeichnen kann, begrenzt. Diese Wellenberge 27 erheben sich gegenüber der übrigen Behälterwand 29 (s. Fig. 7). Die maximale Tiefe T der linienförmigen Vertiefung 17 beträgt ungefähr 1/6 der Dicke D der übrigen Behälterwand 29 in diesem Bereich. Die Erhebungen 27 haben eine maximale Höhe H von ungefähr 1/12 der Dicke D der Behälterwand 29.

In der Bildebene der Fig. 7 von links nach rechts gesehen ist der Verlauf der Außenkontur der Behälterwand 29 mit dem Wandteil 11 leicht ansteigend, bis der höchste Punkt der linken Erhebung 27 als erster Wellenberg erreicht ist, mündet dann in den U-förmigen Verlauf der linienförmige Vertiefung 17 als Wellental ein und geht auf der gegenüberliegenden Seite in weitgehend symmetrischer Form in die rechte Erhebung 27 als weiterer zweiter Wellenberg über, der, ausgehend von der maximal möglichen Höhe H, dann wieder flach ausläuft. Auf der gegenüberliegenden Innenseite 31 ist die Behälterwand 29 im Bereich der linienförmigen Vertiefung 17 verdickt, um eine flache Rippe 33 auszubilden. Die Rippe 33 ist von Vertiefungen 35 zu beiden Seiten flankiert. Insoweit ist also in dem dem Wandteil 11 mit der Struktur 13 gegenüberliegenden, dem Behälterinnern zugewandten Wandteil 31 eine weitere Struktur 33, 35 eingebracht, die der einen Struktur 13 derart nachfolgt, dass an der Stelle der jeweiligen Vertiefung 17 eine Erhebung 33 und an der Stelle der jeweiligen Erhebung 27 eine Vertiefung 35 eingebracht ist. Jedoch macht die Querschnittsdarstellung nach der Fig. 7 deutlich, dass die Erhebung 33 sowie die jeweils sich nach außen hin anschließenden Vertiefungen 35 eine geringere Ausprägung haben als die Welle auf der der Behälterwand 29 außenliegenden Umgebungsseite. Um die geometrische Situation der gegenüberliegenden Anordnung zu verdeutlichen, ist in der Fig. 7 neben fiktiven horizontal verlaufenden Linien eine fiktive Vertikalachse L eingezeichnet, mittels der im oberen Bereich die mittlere Tiefe T für die Vertiefung 17 angetragen wurde.

In Eckbereichen (Position B) oder Kreuzungsbereichen (Position C) muss die Fortschrittsgeschwindigkeit des Lasers entsprechend erhöht oder die Laserintensität reduziert werden, um ein zu tiefes Einbrennen des Lasers in die Behälterwand 29 zu verhindern. Auch treffen sich die linienartigen Vertiefungen 17 in diesen Bereichen nicht zwangsläufig, so dass regelmäßig zwei linienförmige Vertiefungen 17 parallel zueinander verlaufend angeordnet sein können, was insbesondere die Querschnittdarstellungen nach den Fig. 8 und 9 zeigen.

Die erzeugte Struktur in dem Eckbereich (Position B) der Zahl "4" (vgl. Fig. 8), weist also zwei parallel zueinander verlaufende Vertiefungen 17, 37 unterschiedlicher Tiefe auf, die durch eine Zwischenerhebung 39 voneinander getrennt sind. Die Zwischenerhebung 39 kann derart ausgebildet sein, dass sie die randseitigen Erhebungen 27 mit ihren maximalen Höhen H auch übersteigt, wie man dies in der Fig. 9 für einen Knotenpunkt (Position C) sehen kann. Vorteilhafterweise sind dahingehende Zwischenerhebungen 39 und weitere Vertiefungen 37 vermieden; allein bei der Ansteuerung des Laserwerkzeugs ist nicht auszuschließen, dass im Hinblick auf Fertigungsungenauigkeiten bei der Laserführung in Überschneidungsbereichen es zu einer parallelen Kanalführung kommt. Dies gilt dem Grunde nach auch für die Knoten- oder Kreuzungserstellung (Position C), wobei der einfacheren Darstellung wegen die in Blickrichtung auf die Fig. 8 und 9 von oben her gesehene Doppelführung der linienförmigen Vertiefungen und Erhebungen in den Fig. 5 und 6 der Einfachheit halber weggelassen wurde.

Die linienförmigen Vertiefungen 17, 37 sind an Verbindungsstellen, wie Knoten- oder Kreuzungsstellen (Position C), vgl. Fig. 6 und 9, zusammengeführt und werden durch die randseitigen Erhebungen 27 bis auf den Durchgriffsbereich 41 derjeweiligen linienförmigen Vertiefung 17, 37 nach außen hin begrenzt. Im Durchgriffsbereich 41 kann die jeweilige Vertiefung 17, 37 die größte Tiefe aufweisen, was sich insbesondere aus der Darstellung nach der Fig. 5 ergibt. Es besteht jedoch gemäß der Darstellung nach der Fig. 6 auch die Möglichkeit, dass im dahingehenden Verbindungsbereich der jeweiligen Vertiefung 17 es zu einem vermehrten Aufschmelzen von Kunststoffmaterial kommt, so dass dann eine Art Kugel, die als Versteifungselement dienen kann, gebildet ist, die aber wiederum im angesprochenen Durchgriffsbereich 41 eine entsprechende Vertiefung beinhalten kann. Letztendlich kommt es hier auf die Eintragleistung des Lasers in das Kunststoffmaterial an.

Sowohl die jeweils mit dem einen Wandteil 11 erzeugte Struktur 13 als auch zumindest die sich unmittelbar anschließenden benachbarten Wandteile 43, auch in Form der Randbereiche 25, bilden die nach außen zur Umgebung hin abgeschlossene, stetig verlaufende, in sich homogene und blasenfrei gestaltete Behälterwand 29 der Ampulle 1 aus.

Es hat sich als vorteilhaft herausgestellt, die linienförmigen Vertiefungen 17, 37 parallel zur Faserorientierung und mithin zur Extrusionsrichtung des Kunststoffmaterials in der Behälterwand 29 anzuordnen. Auf diese Weise kann die Struktur 13, 15 mit weniger Energieeintrag ausgebildet werden. Auch wird auf diese Weise die Form der jeweiligen Struktur 13, 15 zuverlässiger und formgetreuer erzeugt. Die linearen Vertiefungen 17, 37 werden bevorzugt durch einen CO₂-Laser erzeugt. Dieser Laser hat einen für Kunststoffe an sich ideal einstellbaren Frequenzbereich. In der Praxis haben sich insbesondere CO₂-Laser der 100-Watt-Klasse bewährt, die grundsätzlich bei 40 % Laserleistung betrieben werden.

Das erfindungsgemäße Verfahren eignet sich nicht nur für Kunststofferzeugnisse 1 aus Polyolefin, sondern auch für anderweitige Kunststoffe, insbesondere transparent erscheinende Kunststoffe, wie Polyethylen (PE) oder Polypropylen (PP).

## Patentansprüche

1. Verfahren zum Erzeugen mindestens einer Struktur (13, 15) unter Lasereinwirkung bei mindestens einem Wandteil (11) einer Behälterwand (29) eines mittels eines Blasform-, Füll- und Siegelverfahrens hergestellten Kunststoffbehältererzeugnisses (1), wobei die jeweilige Struktur (13, 15) mittels der Lasereinwirkung zumindest unter Berücksichtigung von
- Laserleistung,
- Einwirkungsdauer des Lasers,
- Art des Kunststoffmaterials und
- Art der gewünschten Struktur
als linienförmige Vertiefung (17, 37) in dem einen Wandteil (11) derart eingebracht wird, wobei randseitig und dem Verlauf der linienförmigen Vertiefung (17, 37) folgend diese von je einer Erhebung (27, 39) begrenzt wird, die unter dem Einfluss der Eigenmaterialspannung des Kunststoffmaterials zur Entstehung gebracht werden, **dadurch gekennzeichnet, dass** durch die Lasereinwirkung die Behälterwand (29) aus Kunststoffmaterial lokal erwärmt wird, ohne dass im Bereich der linienförmigen Vertiefung (17, 37) Kunststoff-Fasern oder dahingehende Molekülketten durchschnitten würden und auch ohne dass das Kunststoffmaterial im Bereich der Vertiefung (17, 37) durch die Lasereinwirkung wesentlich verdampft wird, dass also trotz Erzeugung der Struktur die Behälterwand nicht geschwächt wird.

2. Verfahren nach Anspruch 1, **dadurch gekennzeichnet, dass** sowohl die jeweils in dem einen Wandteil (11) erzeugte Struktur (13, 15) als auch zumindest die sich unmittelbar anschließenden benachbarten Wandteile (43) als eine nach außen zur Umgebung hin abgeschlossene, stetig verlaufende, in sich homogene und blasenfrei gestaltete Behälterwand (29) ausgebildet werden.

3. Verfahren nach Anspruch 1 oder 2, **dadurch gekennzeichnet, dass** bei der Lasereinwirkung der jeweilige Wandteil (11) der Behälterwand (29) noch vom vorhergehenden Formverfahren, insbesondere Blasformverfahren, her erwärmt ist.

4. Verfahren nach einem der vorhergehenden Ansprüche, **dadurch gekennzeichnet, dass** die linienförmigen Vertiefungen (17, 37) an Verbindungsstellen, wie Knotenstellen (B) oder Kreuzungsstellen (C), zusammengeführt werden, die von den randseitigen Erhebungen (27) bis auf den Durchgriffsbereich (41) der jeweiligen Vertiefung (17, 37) nach außen hin begrenzt werden.

5. Verfahren nach einem der vorhergehenden Ansprüche, **dadurch gekennzeichnet, dass** die Laserintensität reduziert wird, wenn sich die Markierungsgeschwindigkeit verringert oder Wandteile (11) ein zweites Mal bestrahlt werden.

6. Verfahren nach einem der vorhergehenden Ansprüche, **dadurch gekennzeichnet, dass** im Bereich von Knotenstellen (B) und/oder Kreuzungsstellen (C) zumindest teilweise mindestens zwei linienförmige Vertiefungen (17, 37) parallel zueinander verlaufend angeordnet werden, die zwischen sich eine weitere Erhebung (39) begrenzen, die auf der gleichen Niveauebene oder davon verschieden zu den sonstigen Niveauebenen der Erhebungen (27) angeordnet wird.

7. Verfahren nach einem der vorhergehenden Ansprüche, **dadurch gekennzeichnet, dass** in den dem Wandteil (11) der Behälterwand (29) mit der Struktur (13, 15) gegenüberliegenden, dem Behälterinneren zugewandten Wandteil (31) dieser Behälterwand (29) eine weitere Struktur (33, 35) eingebracht wird, die der einen Struktur (13, 15) derart nachfolgt, dass an der Stelle der jeweiligen Vertiefung (17) eine Erhebung (33) und an der Stelle der jeweiligen Erhebung (27) eine Vertiefung (35) an- bzw. eingebracht wird.

8. Verfahren nach einem der vorstehenden Ansprüche, **dadurch gekennzeichnet, dass** die jeweilige Struktur (13, 15) durch einen CO₂-Laser erzeugt wird.

9. Verfahren nach einem der vorstehenden Ansprüche, **dadurch gekennzeichnet, dass** die jeweilige Struktur (13, 15) mittels Lasereinwirkung in Kunststoffbehältererzeugnisse (1) aus einem Polyolefin eingebracht wird.

10. Verfahren nach einem der vorstehenden Ansprüche, **dadurch gekennzeichnet, dass** die Struktur zumindest teilweise aus einer im Wandteil (11) des Erzeugnisses eingebrachten linienförmigen Vertiefung (17, 37) gebildet wird, die an mindestens einer ihrer Randseiten, vorzugsweise auf benachbart gegenüberliegenden Randseiten, und dem Verlauf der Vertiefung (17, 37) folgend zumindest teilweise von einer Erhebung (27, 39) begrenzt wird.

11. Verfahren zum Erzeugen mindestens einer Struktur (13, 15) unter Lasereinwirkung bei mindestens einem Wandteil (11) einer Behälterwand (29) eines vorzugsweise mittels eines Blasform-, Füll- und Siegelverfahrens hergestellten Kunststoffbehältererzeugnisses (1), wobei die jeweilige Struktur (13, 15) mittels der Lasereinwirkung zumindest unter Berücksichtigung von
- Laserleistung,
- Einwirkungsdauer des Lasers,
- Art des Kunststoffmaterials und
- Art der gewünschten Struktur
als linienförmige Vertiefung (17, 37) in dem einen Wandteil (11) derart eingebracht wird, dass randseitig und dem Verlauf der linienförmigen Vertiefung (17, 37) folgend diese von je einer Erhebung (27, 39) begrenzt wird, die unter dem Einfluss der Eigenmaterialspannung des Kunststoffmaterials zur Entstehung gebracht werden, **dadurch gekennzeichnet, dass** durch die Lasereinwirkung die Behälterwand (29) aus Kunststoffmaterial lokal erwärmt wird, ohne dass im Bereich der linienförmigen Vertiefung (17, 37) Kunststoff-Fasern oder dahingehende Molekülketten durchschnitten würden und auch ohne dass das Kunststoffmaterial im Bereich der Vertiefung (17, 37) durch die Lasereinwirkung wesentlich verdampft wird, dass also trotz Erzeugung der Struktur die Behälterwand nicht geschwächt wird, und dass bei der Lasereinwirkung der jeweilige Wandteil (11) der Behälterwand (29) noch vom vorhergehenden Formverfahren, insbesondere Blasformverfahren, her erwärmt ist.

## Claims

1. A method for producing at least one structure (13, 15) by the action of a laser on at least one wall component (11) of a container wall (29) of a plastic container product (1) that is produced by means of a blow-moulding, filling and sealing process, the respective structure (13, 15) being introduced as a linear depression (17, 37) into the one wall component (11) by the action of a laser, taking into account at least the
- laser power,
- the duration of the action of the laser,
- the type of plastic material, and
- the type of structure that is desired,
in such a way that this depression (17, 37) is bordered by a respective elevation (27, 39) along the edge following the course of the linear depression (17, 37), said elevation (27, 39) being produced under the influence of the inherent material tension of the plastic material, **characterised in that** the container wall (29) made of plastic material is heated locally by the action of the laser, without plastic fibres or molecule chains of this kind being cut through in the region of the linear depression (17, 37), and also without the plastic material in the region of the depression (17, 37) being substantially vaporized by the action of the laser, so that therefore, despite the production of the structure, the container wall is not weakened.

2. The method according to Claim 1, **characterised in that** both the structure (13, 15) produced in the one respective wall component (11), as well as at least the directly adjoining adjacent wall components (43) are formed as a container wall (29) which is closed off to the surrounding area, extends continuously and is formed such that it is intrinsically homogeneous and bubble-free.

3. The method according to Claim 1 or 2, **characterised in that** during the action of the laser the respective wall component (11) of the container wall (29) is still heated by the preceding moulding process, in particular blow moulding process.

4. The method according to any of the preceding claims, **characterised in that** the linear depressions (17, 37) are merged at connection points such as joints (B) or intersection points (C) which are bordered to the outside by the elevations (27) along the edge up to the penetration region (41) of the respective depression (17, 37).

5. The method according to any of the preceding claims, **characterised in that** the laser intensity is reduced when the marking speed is reduced or wall components (11) are irradiated for a second time.

6. The method according to any of the preceding claims, **characterised in that** in the region of joints (B) and/or intersection points (C) at least two linear depressions (17, 37) are disposed so as to run at least partially parallel to one another, said depressions (17, 37) bordering between them a further elevation (39) which is disposed on the same level or on a level that differs from the other levels of the elevations (27).

7. The method according to any of the preceding claims, **characterised in that** an additional structure (33, 35) is introduced into the wall component (31) of this container wall (29) lying opposite the wall component (11) of the container wall (29) with the structure (13, 15) and facing the inside of the container, which additional structure follows the one structure (13, 15) in such a way that an elevation (33) is applied or introduced at the location of the respective depression (17) and a depression (35) is applied or introduced at the point of the respective elevation (27).

8. The method according to any of the preceding claims, **characterised in that** the respective structure (13, 15) is produced by a CO₂ laser.

9. The method according to any of the preceding claims, **characterised in that** the respective structure (13, 15) is introduced by the action of a laser into plastic container products (1) made of a polyolefin.

10. The method according to any of the preceding claims, **characterised in that** the structure is formed at least partially from a linear depression (17, 37) introduced into the wall component (11) of the product, which depression (17, 37) is bordered at least partially by an elevation (27, 39) at at least one of its edge sides, preferably on adjacently opposing edge sides, and following the course of the depression (17, 37).

11. A method for producing at least one structure (13, 15) by the action of a laser in at least one wall component (11) of a container wall (29) of a plastic container product (1) preferably produced by means of a blow-moulding, filling and sealing process, the respective structure (13, 15) being introduced as a linear depression (17, 37) into the one wall component (11) by the action of a laser and taking into account at least
- the laser power,
- the duration of the action of the laser,
- the type of plastic material and
- the type of structure that is desired
in such a way that this depression (17, 37) is bordered by a respective elevation (27, 39) along the edge following the course of linear depression (17, 37), said elevation (27, 39) being produced under the influence of the inherent material tension of the plastic material, **characterised in that** the container wall (29) made of plastic material is heated locally by the action of the laser, without plastic fibres or molecule chains of this kind being cut through in the region of the linear depression (17, 37), and also without the plastic material in the region of the depression (17, 37) being substantially vaporized by the action of the laser, and **in that** therefore, despite the production of the structure, the container wall is not weakened, and that by the action of the laser the respective wall component (11) of the container wall (29) is still heated by the preceding moulding process, in particular blow-moulding process.

## Revendications

1. Procédé de production d'au moins une structure (13, 15) sous l'action d'un laser dans au moins une partie (11) d'une paroi (29) de récipient d'un produit (1) de récipient en matière plastique, fabriqué par un procédé de moulage par soufflage, de remplissage et de scellement, dans lequel on ménage la structure (13, 15), sous la forme d'une cavité (17, 37) linéaire dans une partie (11) de paroi, au moyen de l'action d'un laser, en tenant compte au moins de
- la puissance du laser,
- la durée d'action du laser,
- le type de la matière plastique et
- le type de la structure souhaitée
dans lequel, du côté du bord et en suivant le tracé de la cavité (17, 37) linéaire, on délimite celle-ci par respectivement une saillie (27, 39) que l'on crée sous l'influence de la contrainte propre de la matière plastique, **caractérisé en ce que**, par l'action du laser, on échauffe localement la paroi (29) de récipient en matière plastique, sans que, dans la région de la cavité (17, 37) linéaire, des fibres de matière plastique ou des chaînes de molécules, qui en proviennent soient coupées, et également sans que la matière plastique soit, dans la région de la cavité (17, 37), sensiblement évaporée par l'action du laser, **en ce que** l'on n'affaiblit pas la paroi du récipient en dépit de la production de la structure.

2. Procédé suivant la revendication 1, **caractérisé en ce que** l'on constitue tant que la structure (13, 15) produite dans une partie (11) de paroi qu'également au moins la partie (43) de paroi voisine se raccordant directement, sous la forme d'une paroi (29) de récipient, fermée vers l'extérieur en direction de l'atmosphère ambiante, s'étendant d'une manière continue et conformée en soi de façon homogène et sans bulle.

3. Procédé suivant la revendication 1 ou 2, **caractérisé en ce que**, dans l'action du laser, la partie (11) de la paroi (29) du récipient est échauffée déjà par le procédé de moulage précédent, notamment par le procédé de moulage par soufflage.

4. Procédé suivant l'une des revendications précédentes, **caractérisé en ce que** l'on réunit les cavités (17, 37) linéaires en des points de liaison, comme des points (B) de noeud ou des points (C) de croisement, qui sont délimités vers l'extérieur par les saillies (27) du côté du bord, à l'exception de la partie (41) de passage de la cavité (17, 37).

5. Procédé suivant l'une des revendications précédentes, **caractérisé en ce que** l'on réduit l'intensité du laser lorsque la vitesse de marquage diminue ou lorsque l'on expose des parties (11) de paroi une deuxième fois au rayonnement.

6. Procédé suivant l'une des revendications précédentes, **caractérisé en ce que**, dans la région des points (B) de noeud et/ou des points (C) de croisement, on fait s'étendre, parallèlement l'une à l'autre, au moins en partie, au moins deux cavités (17, 37) linéaires, qui délimitent entre elles une autre saillie (39), disposée sur le même plan de niveau ou à un plan de niveau différent que les autres plans de niveau des saillies (27).

7. Procédé suivant l'une des revendications précédentes, **caractérisé en ce que**, dans la partie (31) de la paroi (29) du récipient opposée à la partie (11) de la paroi (29) du récipient et à la structure (13, 15) et tournée vers l'intérieur du récipient, on ménage une autre structure (33 à 35), qui suit la une structure (13, 15), de manière à ménager, à l'emplacement de la cavité (17), une saillie (33) et à l'emplacement de la saillie (27), une cavité (35).

8. Procédé suivant l'une des revendications précédentes, **caractérisé en ce que** l'on produit la structure (13, 15) par un laser au CO₂.

9. Procédé suivant l'une des revendications précédentes, **caractérisé en ce que** l'on ménage la structure (13, 15) au moyen de l'action d'un laser dans des produits (1) de récipient en matière plastique en polyoléfine.

10. Procédé suivant l'une des revendications précédentes, **caractérisé en ce que** l'on forme la structure, au moins en partie, dans une cavité (17, 37) linéaire, ménagée dans la partie (11) de paroi du produit, cavité qui est délimitée, au moins en partie, par une saillie (27, 39) et en suivant le tracé de la cavité (17, 37), sur au moins l'un de ses côtés de bord, de préférence sur des côtés de bord opposés voisins.

11. Procédé de production d'au moins une structure (13, 15) par action d'un laser dans au moins une partie (11) d'une paroi (29) de récipient d'un produit (1) de récipient en matière plastique fabriqué de préférence au moyen d'un procédé de moulage par soufflage, de remplissage et de scellement, dans lequel on ménage la structure (13, 15), sous la forme d'une cavité (17, 37) linéaire dans une partie (11) de paroi, au moyen de l'action d'un laser, en tenant compte au moins de
- la puissance du laser,
- la durée d'action du laser,
- le type de la matière plastique et
- le type de la structure souhaitée
dans lequel, du côté du bord, et en suivant le tracé de la cavité (17, 37) linéaire, on délimite celle-ci par respectivement une saillie (27, 39) que l'on crée sous l'influence de la contrainte propre de la matière plastique, **caractérisé en ce que**, par l'action du laser, on échauffe localement la paroi (29) de récipient en matière plastique, sans que, dans la région de la cavité (17, 37) linéaire, des fibres de matière plastique ou des chaînes de molécules qui en proviennent, qui soient coupées, et également sans que la matière plastique soit, dans la région de la cavité (17, 37), sensiblement évaporée par l'action du laser, **en ce que** donc, en dépit de la production de la structure, on n'affaiblit pas la paroi du récipient et **en ce que**, dans l'action du laser, on échauffe la partie (11) de la paroi (29) du récipient déjà par le procédé de moulage précédent, notamment par le procédé de moulage par soufflage.
